# EUROPEAN PATENT SPECIFICATION

(11) **EP 3 904 046 B1**
(45) Date of publication and mention of the grant of the patent: **29.06.2022**
(21) Application number: 21164014.9
(22) Date of filing: 22.03.2021
(51) Int. Cl.: B29C 49/46, B29C 49/06, B29C 49/12, B29C 49/36, B29L 31/00

(54) **AN ASEPTIC FORMING STATION FOR FORMING A CONTAINER STARTING FROM A PREFORM MADE OF THERMOPLASTIC MATERIAL, AN ASEPTIC FORMING APPARATUS AND PROCESS**
ASEPTISCHE FORMSTATION ZUM FORMEN EINES BEHÄLTERS AUSGEHEND VON EINER VORFORM AUS THERMOPLASTISCHEM MATERIAL, ASEPTISCHE FORMVORRICHTUNG UND VERFAHREN
STATION DE FORMAGE ASEPTIQUE POUR FORMER UN RÉCIPIENT À PARTIR D'UNE PRÉFORME EN MATÉRIAU THERMOPLASTIQUE, APPAREIL ET PROCÉDÉ DE FORMAGE ASEPTIQUE

(30) Priority: 27.04.2020 IT 202000009112
(43) Date of publication of application: 03.11.2021
(73) Proprietor: Gea Procomac S.p.A., 43038 Sala Baganza (PR) (IT)
(72) Inventor: PARROZZANI, Marco, 43038 SALA BAGANZA (PR) (IT)
(74) Representative: Dondi, Silvia

(56) References cited:
- EP-A1- 2 246 176
- US-A1- 2011 286 899
- US-A1- 2014 091 499

## Description

The present invention proposes an aseptic forming station for forming a container starting from a preform made of thermoplastic material, an aseptic forming apparatus and process.

The reference sector for the present invention is the bottling of so-called "sensitive" food products, i.e. products that are particularly sensitive to bacteriological contamination and oxidation, such as, for example, isotonic drinks, juices, nectars, soft drinks, tea, milk-based beverages, coffeebased beverages, etc., for which avoiding possible microbiological contamination throughout all packaging steps is of fundamental importance.

Aseptic forming stations and forming processes from the prior art are described in the documents US2014/091499A1 and US2011/286899A1.

According to the prior art, a machine for stretch-blowing comprises a plurality of workstations, each with a forming mould.

Aside from design variations, each mould comprises two half-moulds that reproduce the shape of the sides of the container and a lower bottom that reproduces the shape of the base of the container to be obtained.

The preform, previously heated, is introduced into one of the moulds and the mouth is sealed by a closing element - the "seal" or blowing nozzle - through which the compressed air is blown inside the preform.

In the initial step of the forming process, the seal sends air into the preform at medium pressure (maximum 15-16 bar) and, simultaneously, a stretching rod is gradually introduced into the preform until it reaches the bottom.

This step is generally defined as "pre-blowing".

After touching the bottom, the stretching rod continues the linear movement so as to stretch the preform until it reaches the desired length of the container to be obtained.

Subsequently, the seal blows air at high pressure (about 40 bar) so as to expand the preform until it adheres to the inside walls of the half-moulds and of the bottom. This high pressure blowing is the actual "blowing" step that follows the "pre-blowing".

Simultaneously, the stretching rod retracts until it exits from the container. At the end of the forming process, the air inside the container is discharged, again through the seal. The seal is then removed from the container.

In general, the air used during moulding of the container is supplied to the blowing nozzle at the different requested pressures by suitable pressure lines.

In the specific field of moulding containers aseptically, from EP2246176 the use of an isolation device is known that defines a contamination-controlled environment separated from the (dirty) external environment. The pressurized air used in blowing passes through one or more sterile filters before entering the isolation device.

In a known solution, the sterile filters are arranged between the pressure adjusters and the manifold or rotating joint, i.e. on the static part of the machine. The contamination-controlled environment defined by the isolation device contains the rotating joints, the blowing valves, the nozzles and moulds, whilst the sterile filters are in the dirty environment, i.e. outside the contamination-controlled environment.

This solution shows different limits, including a long path between the sterile filter (outside the isolator) and the forming mould (inside the isolator), in which to guarantee sterility. There are thus high risks of recontamination and the complexity of sterilizing this circuit part. Further, there is the need to use sterile blowing valves, i.e. made so as not to recontaminate the blowing air previously sterilized by the filters.

Further, having to keep sterile a large part of the circuit of the blowing air, thorough cleaning of the circuits from particulate, processing residues, grease, etc., must be guaranteed.

In another known solution, the sterile filters are arranged downstream of the rotating manifold and before the blowing valve, i.e. on the rotating part of the machine. The isolation device contains the blowing valves, the seals and the moulds. Although the area to be kept sterile is reduced with respect to the previous solution, the same risks of recontamination set out above exist. In addition, the arrangement of the sterile filters on the rotating part of the machine entails mounting difficulties and significant overall dimensions.

Both known solutions further have the drawback of having to provide as many sterilization lines as there are air pressure lines so as to sterilize everything that is downstream of the sterile filters before starting to produce sterile containers.

In this context, the basic technical task of the present invention is to offer an aseptic forming station for forming a container starting with a preform in thermoplastic material, an aseptic forming apparatus and process that overcome the drawbacks of the prior art mentioned above.

In particular, the object of the present invention is to propose an aseptic forming station of a container starting from a preform made of thermoplastic material, an aseptic forming apparatus and process, in which the risks of recontamination of the sterile air are reduced compared with known solutions.

Another object of the present invention is to make available an aseptic forming station for forming a container starting from a preform made of thermoplastic material that is structurally simpler and more compact than prior-art solutions.

The defined technical task and the specified aims are substantially achieved by an aseptic forming station for forming a container starting from a preform made of thermoplastic material, comprising:
- a blowing nozzle applicable to a mouth of the preform through which compressed air coming from a first compressed air supply line or from a second compressed air supply line is injected into the preform;
- valve means configured to establish a selective communication between the compressed air supply lines and the blowing nozzle;
- at least one sterile filter arranged downstream of the valve means.

In accordance with one aspect of the invention, the sterile filter is interposed between the valve means and the blowing nozzle.

In accordance with one embodiment, the forming station comprises a conduit that extends between the valve means and the blowing nozzle. The sterile filter is arranged in a housing obtained in the conduit.

The forming station comprises a stretching rod and the filter is so arranged as not to intercept the direction of extension of the stretching rod.

In accordance with one embodiment, the sterile filter is arranged in such a manner that the axis thereof is substantially orthogonal to the direction of extension of the stretching rod.

In accordance with another embodiment, the sterile filter is arranged in such a manner that the axis thereof is substantially parallel to the direction of extension of the stretching rod.

In accordance with another embodiment, the sterile filter is arranged so as to intercept the direction of extension of the stretching rod.

The valve means comprises a plurality of blowing valves housed in a single box-shaped body. The sterile filter is housed in the box-shaped body.

In accordance with one embodiment, the sterile filter is integrated into the blowing nozzle.

The forming station comprises a forming mould defining a housing cavity of the preform. The sterile filter is situated upstream of the housing cavity. In accordance with another aspect of the invention, the blowing nozzle is configured to inject into the preform also compressed air coming from a third compressed air supply line communicating selectively with the blowing nozzle by further valve means.

In accordance with one embodiment, the forming station comprises several sterile filters arranged in series downstream of the valve means. The defined technical task and the specified aims are substantially achieved by an aseptic forming apparatus for forming containers starting from preforms made of thermoplastic material, comprising:
- a plurality of forming stations according to the invention proposed here, in which each forming station comprises a forming mould;
- a compressed air supply circuit comprising at least one first compressed air supply line having maximum pressure of 15 bar and a second compressed air supply line having maximum pressure of 40 bar;
- an isolation device defining a contamination-controlled environment; inside which the forming moulds are arranged.

The sterile filters of the forming stations are located outside the isolation device.

In accordance with one embodiment, the forming apparatus further comprising a third compressed air supply line at intermediate pressure between the first compressed air supply line and the second compressed air supply line.

The forming apparatus comprises also at least one inlet for a sterilizing substance, which communicates selectively with one of the compressed air supply lines.

The specific technical task and the specified aims are substantially attained by an aseptic forming process for forming a container starting from a preform made of a thermoplastic material placed in the forming station, comprising steps of:
- opening alternatively a blowing valve of the valve means and passing the air coming from the corresponding supply line through the blowing valve;
- sending the air from the open blowing valve to the sterile filter;
- injecting the air coming from the sterile filter into the preform.

Further characteristics and advantages of the present invention will become more apparent from the approximate and thus non-limiting description of a preferred, but not exclusive, embodiment of an aseptic forming station for forming a container starting with a preform made of thermoplastic material, of an aseptic forming apparatus and process, as illustrated in the accompanying drawings, of which:
- figures 1a and 1b illustrate schematically two different embodiments of a supply system of an aseptic forming apparatus in which an aseptic forming station for forming a container starting from a preform made of thermoplastic material, in accordance with the present invention, is visible;
- figures 2 to 5 illustrate as many embodiments of the aseptic forming station for forming a container starting from a preform made of thermoplastic material, in accordance with the present invention.

With reference to the figures, number 1 indicates a forming station for forming a container 100 starting from a preform made of thermoplastic material.

The forming station 1 comprises a forming mould 2 in which the preform is housed to be formed into a container 100.

Each forming mould 2 comprises a first half-mould 2a and a second half-mould 2b that can be brought together to define at least one housing cavity for housing a preform.

Preferably, the forming mould 2 preferably comprises a bottom (not illustrated) which cooperates with the half-moulds 2a, 2b in order to form the bottom of the container 100.

In the forming station 1, there is a blowing nozzle (not illustrated) that is applicable to a mouth 100a of the preform. In the sector, the blowing nozzle is also known as a "seal".

Compressed air is injected through the blowing nozzle inside the preform. The compressed air can have different pressures during the steps of moulding the preform.

In particular, in the embodiments disclosed and illustrated here, the compressed air can have:
- maximum pressure of 15 bar, during a first "pre-blowing" step;
- maximum pressure of 20 bar during a second "pre-blowing" or medium pressure blowing step;
- maximum pressure of 40 bar during a "blowing" step.

In this context, the compressed air having maximum pressure equal to 15 bar (also called "low pressure air") comes from a first supply line 4, the compressed air having maximum pressure equal to 40 bar (also called "high pressure air") comes from a second supply line 5 and the compressed air having maximum pressure equal to 20 bar (also called "medium pressure air") comes from a third supply line 6.

In one embodiment (which is not illustrated), there are only two compressed air supply lines instead of three, in particular low pressure air and high pressure air.

In the forming station 1, there are valve means P1, P2, Pn configured to establish a selective communication between two or more compressed air supply lines 4, 5, 6 and the blowing nozzle.

During the injection of compressed air, the preform is stretched by a stretching rod having an extension along a direction parallel to an axis X of the forming mould 2. Preferably, the direction of extension of the stretching rod coincides with the axis X of the forming mould 2.

The stretching rod is mounted sliding within the blowing nozzle so as to be able to penetrate inside the preform through the mouth 100a.

In the embodiment disclosed and illustrated here, the valve means P1, P2, Pn comprise a blowing valve P1, P2, Pn for each supply line 4, 5, 6. Each blowing valve P1, P2, Pn is configurable at least in:
- an open position, in which it permits the passage of compressed air to the blowing nozzle, and
- a closed position, in which it interrupts the passage of compressed air to the blowing nozzle.

Originally, at least one sterile filter SF is arranged downstream of the valve means P1, P2, Pn.

In this context, a sterile filter refers to a filter that is able to remove nearly all the particles dispersed in the air.

For example, a sterile filter has the following properties:
- has a high retention rate, i.e. greater than 99.99998% referring to particles of 0.2 µm and greater than 99.9999998% referring to particles of 0.02 µm;
- has a very high retention rate for viruses and bacteriophages, i.e. LRV > 7/cm²;
- is sterilizable, i.e. can be sterilized with a sterilizing agent (e.g. oxygenated water) before starting to produce containers.

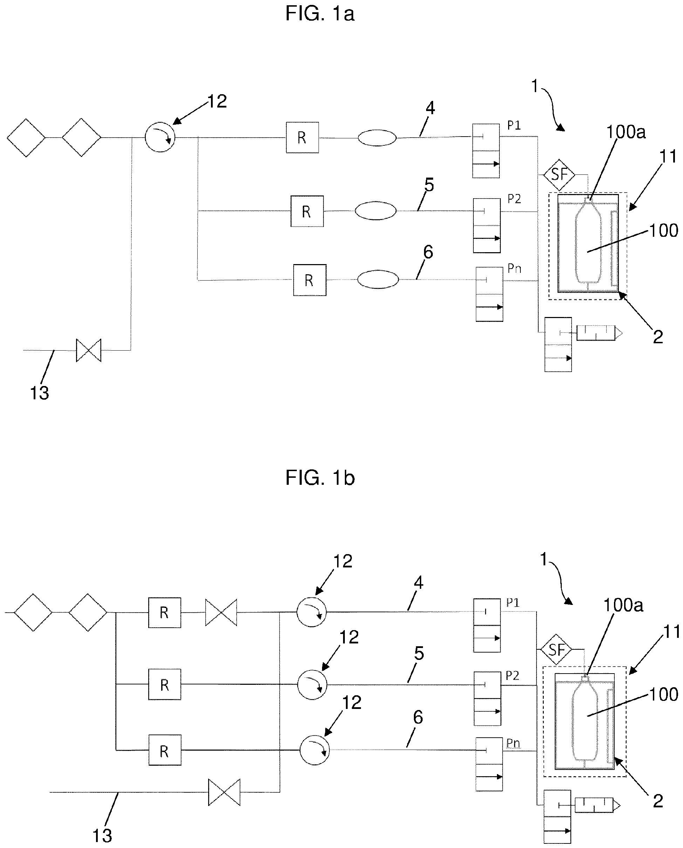

In particular, the sterile filter SF is situated upstream of the housing cavity. In accordance with one embodiment, illustrated in figures 1a-1b, the sterile filter SF is interposed between the valve means P1, P2, Pn and the blowing nozzle.

According to one aspect of the invention, there are two sterile filters SF arranged in series for redundancy.

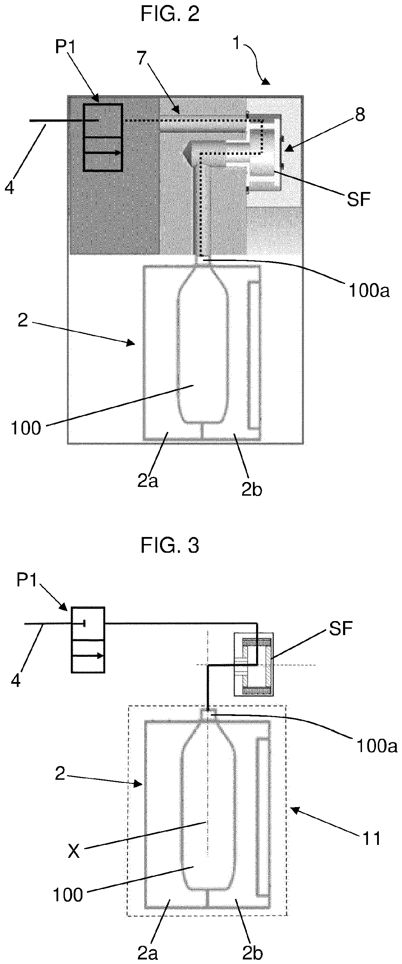

In accordance with one embodiment, illustrated in figure 2, the forming station 1 comprises a conduit 7 that extends between the valve means P1, P2, Pn and the blowing nozzle. The sterile filter SF is arranged in a housing 8 obtained in the conduit 7.

According to one aspect of the invention, the sterile filter SF is arranged so as not to intercept the direction of extension X of the stretching rod.

Preferably, in the configuration illustrated in figure 3, the sterile filter SF is arranged in such a manner that the axis thereof is substantially orthogonal to the direction of extension of the stretching rod (in this case coinciding with the axis X of the forming mould 2).

In an alternative variant to figure 3, the sterile filter SF is arranged in such a manner that the axis thereof is substantially parallel to (but does not coincide with) the direction of extension X of the stretching rod.

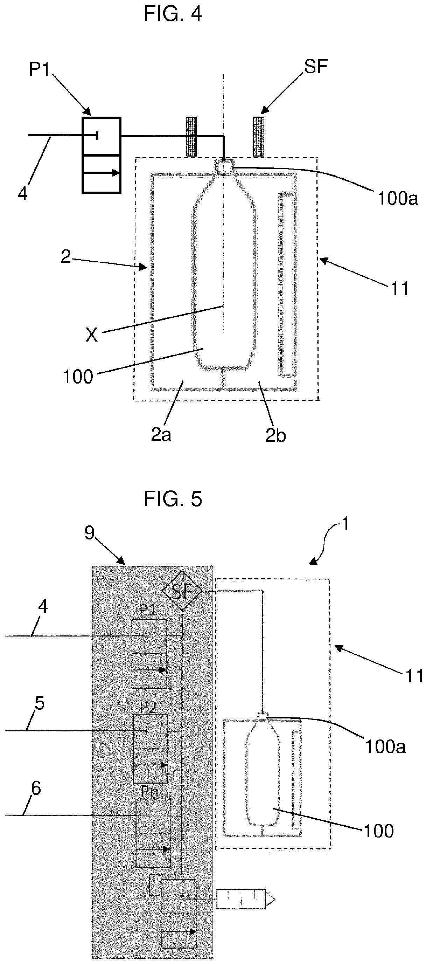

In accordance with a further embodiment, illustrated in figure 4, the sterile filter is arranged so as to intercept the direction of extension of the stretching rod. Preferably, the axis of the sterile filter SF substantially coincides with the direction of extension of the rod (in the case of figure 4, thus with the axis X of the forming mould 2). In this manner, the structure of the forming station 1 is even more compact because the dead volume is reduced.

In accordance with a further embodiment, illustrated in figure 5, the blowing valves P1, P2, Pn are housed in a single box-shaped body 9, in which also the sterile filter SF is housed. In particular, figure 5 illustrates the sterile filter SF downstream of the blowing valves P1, P2, Pn and inside the box-shaped body 9.

In one embodiment, several sterile filters SF in series can be present in the box-shaped body 9.

In a further embodiment (which is not illustrated), the sterile filter SF is integrated into the blowing nozzle.

The present invention also relates to an aseptic forming apparatus for forming containers starting from preforms made of thermoplastic material. The forming apparatus comprises:
- a plurality of forming stations 1 according to what has been disclosed above;
- a compressed air supply circuit comprising at least one first compressed air supply line 4 having maximum pressure of 15 bar and a second compressed air supply line 5 having maximum pressure of 40 bar;
- an isolation device 11 defining a contamination-controlled environment inside which the forming moulds 2 are arranged.

Preferably, the forming apparatus also comprises a third compressed air supply line 6 at intermediate pressure between the first supply line 4 and the second compressed air supply line 5.

In practice, the isolation device 11 defines an environment separated from the external (dirty) environment by means of a physical separation which has the purpose of limiting the entry of contaminants from the external environment.

The sterile filter SF of each forming station 1 is located outside the isolation device 11.

Also the valve means P1, P2, Pn are situated outside the isolation device 11. This enables a sterile filter SF to be arranged for each forming mould 2 / housing cavity, but it is a simpler and cheaper filter than those of the prior art. Further, by positioning the sterile filter SF on the housing cavity, the portion of circuit of blowing air to be sterilized is reduced with respect to known solutions.

Preferably, a pressure regulator R is arranged along each compressed air supply line 4, 5, 6 to regulate the air at the corresponding pressure (low pressure, medium pressure or high pressure).

Preferably, the forming apparatus comprises a fixed base, a rotating turntable on which the forming stations 1 and at least one rotating joint that connects the fixed base (i.e. the static part) to the rotating turntable are arranged.

In particular, there is a rotating joint provided with several channels 12, one for the first supply line 4, one for the second supply line 5 and one for the third supply line 6 (if any).

In figure 1a, the rotating joint (namely channel 12 thereof) is arranged upstream of the regulators R and of the compressed air supply lines 4, 5, 6. In figure 1b, the channels 12 of the rotating joint are downstream of the corresponding regulator R.

The forming apparatus further comprises an inlet 13 for a sterilizing substance. This inlet 13 communicates selectively with one of the compressed air supply lines 4, 5, 6.

Preferably, the inlet 13 of the sterilizing substance is arranged upstream of the rotating joint 12 (i.e. of the channels thereof).

Figure 1b shows an inlet 13 of sterilizing substance only for the first compressed air supply line 4. Preferably, there is an inlet 13 of sterilizing substance for each sterile compressed air supply line 4, 5, 6. Arranging the sterile filter SF downstream of the valve means P1, P2, Pn avoids having to sterilize and keep sterile the path of air upstream of the sterile filter SF, as on the other hand occurs in known solutions.

The operation of the aseptic forming apparatus for forming containers starting from preforms made of thermoplastic material is disclosed below. Reference is made to the multiple recovery of figure 3, which is the most complete recovery

In the forming stations 2, there are the preforms that are ready for being formed into containers.

Low pressure (15 bar) compressed air is supplied along the first supply line 4. The corresponding blowing valve P1 is opened for a set time (duration of the pre-blowing step) to enable the low pressure air to flow towards the blowing nozzles. Before being injected into the preforms, the compressed air passes through the sterile filter SF.

Subsequently, the blowing valve P1 is closed and the blowing valve P2 is opened to let air coming from the second supply line 5 of high pressure (40 bar) compressed air to pass through. Also in this case, the compressed air passes through the sterile filter SF before being injected into the preforms.

The same thing happens to the medium pressure compressed air coming from the third supply line 6 (if any).

From the description given, the characteristics of an aseptic forming station for forming a container starting from a preform made of thermoplastic material, of an aseptic forming apparatus and process according to the present invention will be clear, as will the resulting advantages thereof.

In particular, having arranged the sterile filter downstream of the valve means enables the path of the sterile air to be shortened and thus the risk of recontamination to be limited. In fact, there is a significant reduction of the circuit part to be sterilized before production of the containers, which has to be kept sterile during production of the containers.

Further, a single sterile filter is sufficient for each forming station (and not for one for each pressure line that supplies the forming station), which contributes to making the design compact.

Further, as the filter is arranged downstream of the blowing valves, it is no longer necessary to provide a sterile design of the blowing valves, with a consequent constructional simplification and reduction of costs.

## Claims

1. An aseptic forming station (1) for forming a container (100) starting from a preform made of thermoplastic material, comprising:
- a blowing nozzle applicable to a mouth (100a) of the preform through which compressed air coming from a first compressed air supply line (4) or from a second compressed air supply line (5) is injected into the preform;
- valve means (P1, P2) configured to establish a selective communication between the compressed air supply lines (4, 5) and the blowing nozzle; **characterized in that** it comprises further
- at least one sterile filter (SF) arranged downstream of said valve means (P1, P2).

2. The forming station (1) according to claim 1, wherein said at least one sterile filter (SF) is interposed between said valve means (P1, P2) and the blowing nozzle.

3. The forming station (1) according to claim 1 or 2, further comprising a conduit (7) that extends between the valve means (P1, P2) and said blowing nozzle, said at least one sterile filter (SF) being arranged in a housing (8) obtained in the conduit (7).

4. The forming station (1) according to any one of the preceding claims, further comprising a stretching rod, said at least one filter (SF) being arranged so as not to intercept the direction of extension of the stretching rod.

5. The forming station (1) according to claim 4, wherein the sterile filter (SF) is arranged in such a manner that the axis thereof is substantially orthogonal to the direction of extension of the stretching rod.

6. The forming station (1) according to claim 4, wherein the sterile filter (SF) is arranged in such a manner that the axis thereof is substantially parallel to the direction of extension of the stretching rod.

7. The forming station (1) according to any one of claims 1 to 3, further comprising a stretching rod, said at least one sterile filter (SF) being arranged so as to intercept the direction of extension of the stretching rod.

8. The forming station (1) according to claim 1, wherein said valve means (P1, P2) comprises a plurality of blowing valves housed in a single box-shaped body (9), said at least one sterile filter (SF) being housed in the box-shaped body (9).

9. The forming station (1) according to claim 1, wherein said at least one sterile filter (SF) is integrated into said blowing nozzle.

10. The forming station (1) according to any one of the preceding claims, comprising a forming mould (2) defining a housing cavity housing the preform, said at least one sterile filter (SF) being situated upstream of said housing cavity.

11. The forming station (1) according to any one of the preceding claims, wherein said blowing nozzle is configured to inject into the preform also compressed air coming from a third compressed air supply line (6) communicating selectively with the blowing nozzle by further valve means (Pn).

12. The forming station (1) according to any one of the preceding claims, comprising several sterile filters (SF) arranged serially downstream of said valve means (P1, P2).

13. An aseptic forming apparatus for forming containers (100) starting from preforms made of thermoplastic material, comprising:
- a plurality of forming stations (1) according to any one of claims 1 to 12, each forming station comprising a forming mould (2);
- a compressed air supply circuit comprising at least one first compressed air supply line (4) having maximum pressure of 15 bar and a second compressed air supply line (5) having maximum pressure of 40 bar;
- an isolation device (11) defining a contamination-controlled environment inside which the forming moulds (2) are arranged.

14. The forming apparatus according to claim 13, wherein the sterile filters (SF) of said forming stations (1) are arranged outside the isolation device (11).

15. The forming apparatus according to claim 13 or 14, further comprising a third compressed air supply line (6) at intermediate pressure between the first compressed air supply line (4) and the second compressed air supply line (5).

16. The forming apparatus according to any one of claims 13 to 15, comprising at least one inlet (13) for a sterilizing substance, said at least one inlet (13) communicating selectively with one of the compressed air supply lines (4, 5, 6).

17. An aseptic forming process for forming a container (100) starting from a preform made of thermoplastic material placed in a forming station (1) according to any one of claims 1 to 12, comprising the steps of:
- opening a blowing valve of said valve means (P1, P2) and passing the air coming from the first supply line (4) or from the second supply line (5) through said blowing valve;
- sending the air from the blowing valve to the sterile filter (SF); injecting the air coming from the sterile filter (SF) to the preform

## Patentansprüche

1. Aseptische Formstation (1) zum Formen eines Behälters (100) ausgehend von einer Vorform aus thermoplastischem Material, umfassend:
- eine Blasdüse, die auf eine Mündung (100a) der Vorform anwendbar ist, durch die Druckluft, die von einer ersten Druckluftzuführleitung (4) oder von einer zweiten Druckluftzuführleitung (5) kommt, in die Vorform eingeblasen wird;
- Ventilmittel (P1, P2), die ausgelegt sind, um eine selektive Kommunikation zwischen den Druckluftzuführleitungen (4, 5) und der Blasdüse herzustellen; **dadurch gekennzeichnet, dass** sie ferner
- mindestens einen Sterilfilter (SF) umfasst, der stromabwärts der Ventilmittel (P1, P2) angeordnet ist.

2. Formstation (1) nach Anspruch 1, wobei der mindestens eine Sterilfilter (SF) zwischen den Ventilmitteln (P1, P2) und der Blasdüse angeordnet ist.

3. Formstation (1) nach Anspruch 1 oder 2, ferner umfassend einen Kanal (7), der sich zwischen den Ventilmitteln (P1, P2) und der Blasdüse erstreckt, wobei der mindestens eine Sterilfilter (SF) in einem im Kanal (7) erhaltenen Gehäuse (8) angeordnet ist.

4. Formstation (1) nach einem der vorhergehenden Ansprüche, ferner umfassend einen Streckstab, wobei der mindestens eine Filter (SF) angeordnet ist, sodass er die Ausdehnungsrichtung des Streckstabes nicht abfängt.

5. Formstation (1) nach Anspruch 4, wobei der Sterilfilter (SF) angeordnet ist, sodass seine Achse im Wesentlichen orthogonal zur Ausdehnungsrichtung des Streckstabes ist.

6. Formstation (1) nach Anspruch 4, wobei der Sterilfilter (SF) angeordnet ist, sodass seine Achse im Wesentlichen parallel zur Ausdehnungsrichtung des Streckstabes ist.

7. Formstation (1) nach einem der Ansprüche 1 bis 3, ferner umfassend einen Streckstab, wobei der mindestens eine Sterilfilter (SF) angeordnet ist, sodass er die Ausdehnungsrichtung des Streckstabes abfängt.

8. Formstation (1) nach Anspruch 1, wobei die Ventilmittel (P1, P2) eine Vielzahl von Blasventilen umfasst, die in einem einzigen kastenförmigen Körper (9) untergebracht sind, wobei der mindestens eine Sterilfilter (SF) im kastenförmigen Körper (9) untergebracht ist.

9. Formstation (1) nach Anspruch 1, wobei der mindestens eine Sterilfilter (SF) in die Blasdüse integriert ist.

10. Formstation (1) nach einem der vorhergehenden Ansprüche, umfassend ein Formwerkzeug (2), das einen Gehäusehohlraum definiert, der die Vorform unterbringt, wobei das mindestens eine Sterilfilter (SF) stromaufwärts des Gehäusehohlraums angeordnet ist.

11. Formstation (1) nach einem der vorhergehenden Ansprüche, wobei die Blasdüse so ausgelegt ist, dass sie auch Druckluft, die von einer dritten Druckluftzuführleitung (6) kommt, in die Vorform einbläst, die wahlweise über zusätzliche Ventilmittel (Pn) mit der Blasdüse kommuniziert.

12. Formstation (1) nach einem der vorhergehenden Ansprüche, umfassend mehrere Sterilfilter (SF), die in Reihe stromabwärts der Ventilmittel (P1, P2) angeordnet sind.

13. Aseptische Formvorrichtung zum Formen von Behältern (100) ausgehend von Vorformen aus thermoplastischem Material, umfassend:
- eine Vielzahl von Formstationen (1) nach einem der Ansprüche 1 bis 12, wobei eine jede Formstation ein Formwerkzeug (2) umfasst;
- einen Druckluftzufuhrkreislauf, der mindestens eine erste Druckluftzuführleitung (4) mit einem maximalen Druck von 15 bar und eine zweite Druckluftzuführleitung (5) mit einem maximalen Druck von 40 bar umfasst;
- eine Isolationsvorrichtung (11), die eine kontaminationskontrollierte Umgebung definiert, in der die Formwerkzeuge (2) angeordnet sind.

14. Formvorrichtung nach Anspruch 13, wobei die Sterilfilter (SF) der Formstationen (1) außerhalb der Isolationsvorrichtung (11) angeordnet sind.

15. Formvorrichtung nach Anspruch 13 oder 14, ferner umfassend eine dritte Druckluftzuführleitung (6) mit Zwischendruck zwischen der ersten Druckluftzuführleitung (4) und der zweiten Druckluftzuführleitung (5).

16. Formvorrichtung nach einem der Ansprüche 13 bis 15, umfassend mindestens einen Einlass (13) für eine sterilisierende Substanz, wobei der mindestens eine Einlass (13) wahlweise mit einer der Druckluftzuführleitungen (4, 5, 6) kommuniziert.

17. Aseptisches Formverfahren zum Formen eines Behälters (100), ausgehend von einer Vorform aus thermoplastischem Material, die in einer Formstation (1) nach einem der Ansprüche 1 bis 12 angeordnet ist, umfassend die Schritte:
- Öffnen eines Blasventils der Ventilmittel (P1, P2) und Leiten der von der ersten Zuführleitung (4) oder von der zweiten Zuführleitung (5) kommenden Luft durch das Blasventil;
- Senden der Luft vom Blasventil zum Sterilfilter (SF);
- Einblasen der Luft vom Sterilfilter (SF) in die Vorform.

## Revendications

1. Station de formage aseptique (1) pour former un récipient (100) à partir d'une préforme en matériau thermoplastique, comprenant :
- une buse de soufflage applicable à une embouchure (100a) de la préforme à travers laquelle de l'air comprimé provenant d'une première ligne d'alimentation en air comprimé (4) ou d'une deuxième ligne d'alimentation en air comprimé (5) est injecté dans la préforme ;
- des moyens de soupape (P1, P2) configurés pour établir une communication sélective entre les lignes d'alimentation en air comprimé (4, 5) et la buse de soufflage ; **caractérisée en ce qu'**elle comprend de plus
- au moins un filtre stérile (SF) disposé en aval desdits moyens de soupape (P1, P2).

2. Station de formage (1) selon la revendication 1, dans laquelle ledit au moins un filtre stérile (SF) est interposé entre lesdits moyens de soupape (P1, P2) et la buse de soufflage.

3. Station de formage (1) selon la revendication 1 ou 2, comprenant de plus un conduit (7) se prolongeant entre les moyens de soupape (P1, P2) et ladite buse de soufflage, ledit au moins un filtre stérile (SF) étant disposé dans un logement (8) obtenu dans le conduit (7).

4. Station de formage (1) selon l'une quelconque des revendications précédentes, comprenant de plus une tige d'étirage, ledit au moins un filtre (SF) étant disposé de manière à ne pas intercepter la direction d'extension de la tige d'étirage.

5. Station de formage (1) selon la revendication 4, dans laquelle le filtre stérile (SF) est disposé de manière à ce que son axe soit essentiellement orthogonal à la direction d'extension de la tige d'étirage.

6. Station de formage (1) selon la revendication 4, dans laquelle le filtre stérile (SF) est disposé de telle sorte que son axe est essentiellement parallèle à la direction d'extension de la tige d'étirage.

7. Station de formage (1) selon l'une quelconque des revendications 1 à 3, comprenant de plus une tige d'étirage, ledit au moins un filtre stérile (SF) étant disposé de manière à intercepter la direction d'extension de la tige d'étirage.

8. Station de formage (1) selon la revendication 1, dans laquelle lesdits moyens de soupape (P1, P2) comprennent une pluralité de soupapes de soufflage logées dans un corps unique (9) en forme de boîte, ledit au moins un filtre stérile (SF) étant logé dans le corps en forme de boîte (9).

9. Station de formage (1) selon la revendication 1, dans laquelle ledit au moins un filtre stérile (SF) est intégré dans ladite buse de soufflage.

10. Station de formage (1) selon l'une quelconque des revendications précédentes, comprenant un moule de formage (2) définissant une cavité de logement logeant la préforme, ledit au moins un filtre stérile (SF) étant situé en amont de ladite cavité de logement.

11. Station de formage (1) selon l'une quelconque des revendications précédentes, dans laquelle ladite buse de soufflage est configurée pour injecter dans la préforme également de l'air comprimé provenant d'une troisième ligne d'alimentation en air comprimé (6) communiquant sélectivement avec la buse de soufflage par des moyens de soupape (Pn) supplémentaires.

12. Station de formage (1) selon l'une quelconque des revendications précédentes, comprenant plusieurs filtres stériles (SF) disposés en série en aval desdits moyens de soupape (P1, P2).

13. Appareil de formage aseptique pour former des récipients (100) à partir de préformes en matériau thermoplastique, comprenant :
- une pluralité de stations de formage (1) selon l'une quelconque des revendications 1 à 12, chaque station de formage comprenant un moule de formage (2) ;
- un circuit d'alimentation en air comprimé comprenant au moins une première ligne d'alimentation en air comprimé (4) ayant une pression maximale de 15 bars et une deuxième ligne d'alimentation en air comprimé (5) ayant une pression maximale de 40 bars ;
- un dispositif d'isolation (11) définissant un environnement à contamination contrôlée à l'intérieur duquel sont disposés les moules de formage (2).

14. Appareil de formage selon la revendication 13, dans lequel les filtres stériles (SF) desdites stations de formage (1) sont disposés à l'extérieur du dispositif d'isolation (11).

15. Appareil de formage selon la revendication 13 ou 14, comprenant de plus une troisième ligne d'alimentation en air comprimé (6) à une pression intermédiaire entre la première ligne d'alimentation en air comprimé (4) et la deuxième ligne d'alimentation en air comprimé (5).

16. Appareil de formage selon l'une quelconque des revendications 13 à 15, comprenant au moins une entrée (13) pour une substance stérilisante, ladite au moins une entrée (13) communiquant sélectivement avec l'une des lignes d'alimentation en air comprimé (4, 5, 6).

17. Procédé de formage aseptique pour former un récipient (100) à partir d'une préforme en matériau thermoplastique placée dans une station de formage (1) selon l'une quelconque des revendications 1 à 12, comprenant les étapes de :
- ouvrir une soupape de soufflage desdits moyens de soupape (P1, P2) et faire passer l'air provenant de la première ligne d'alimentation (4) ou de la deuxième ligne d'alimentation (5) à travers ladite soupape de soufflage ;
- envoyer l'air de la soupape de soufflage au filtre stérile (SF) ;
- injecter l'air provenant du filtre stérile (SF) dans la préforme.
